# EUROPÄISCHE PATENTSCHRIFT

(11) **EP 1 477 612 B1**
(45) Veröffentlichungstag und Bekanntmachung des Hinweises auf die Patenterteilung: **30.08.2006**
(21) Anmeldenummer: 03010733.8
(22) Anmeldetag: 14.05.2003
(51) Int. Cl.: E01H 10/00

(54) **Autobahn-Salzstreusystem**
Salt spreading system for highways
Système d'épandage de sel pour autoroute

(43) Veröffentlichungstag der Anmeldung: 17.11.2004
(73) Patentinhaber: Utsch, Jürgen Günter, 56321 Rhens (DE)
(72) Erfinder: Utsch, Jürgen Günter, 56321 Rhens (DE)

(56) Entgegenhaltungen:
- DE-A- 3 938 147
- FR-A- 1 032 086
- US-A- 6 154 699

## Beschreibung

Gegenstand der Erfindung betrifft ein Verfahren zur Verhinderung von Blitzeis und Schneeglätte mit dessen Hilfe es möglich gemacht wird, ein Autobahnabschnitt von bis zu 100 km Länge und mehr, zeitgleich in wenigen Minuten mit Streusalz oder anderen geeigneten Mitteln einzudecken.

Bisher ist es üblich, Streufahrzeuge mit einer Ladung von einigen Tonnen Streugut auf die Strecke zu schicken. Dabei bedienen die Fahrzeuge im laufenden Verkehr in einer endlichen Zeit, eine endliche Strecke, oft nicht ohne Behinderung des fließenden Verkehrs. Wird die Maßnahme vorsorglich getroffen, das heißt vor Beginn der Niederschläge, muß je nach Verfügbarkeit der Streufahrzeuge sehr frühzeitig damit begonnen werden. Hierbei können sich jedoch einige Unwagbarkeiten sehr negativ auswirken. Das Streugut auf trockener Fahrbahn kann hinweg geweht werden, bevor der Niederschlag einsetzt und somit die Wirkung verfehlt wird. Wird jedoch der Einsatz von Streumitteln nach Beginn der Niederschlige eingesetzt, vergeht auch bei Einsatz vieler Streufahrzeuge, sehr viel Zeit. Die daraus resultierenden negativen Umstände, wie starke Verkehrsbehinderungen, lange Staus durch liegengebliebene Fahrzeuge bis hin zu schweren Verkehrsunfällen, ist aus der Vergangenheit hinreichend bekannt

Gegenstand der Erfindung ist es, dem rollenden Schwerlast Verkehr, etwa LKW über 7,5 Tonnen, den Streudienst selbst durchführen zu lassen. Und zwar zeitgleich mit Beginn des Niederschlages. Es wird vorausgesetzt, daß bei einer LKW Verkehrsdichte, wie sie sich heute darstellt, mit mindestens 5 bis 10 Fahrzeugen pro Kilometer auszugehen ist. Diese endlosen Kolonnen sind erfahrungsgemäß, gleichmäßig über das Gesamte Bundesautobahn Netz, Tag und Nacht verteilt. Durch eine zentrale Stelle, zum Beispiel die Autobahn Meisterei, erhalten alle diese LKW zeitgleich den Befehl, mit der Streuung zu beginnen.

Ausgehend vom Oberbegriff des Anspruchs 1, der sich auf die US-A-6154699 stützt, wird dieses dadurch erreicht, daß hierfür der rollende Schwerlast Verkehr herangezogen wird. Somit verfügt jeder Lastzug oberhalb eines genau bestimmten zulässigem Gesamtgewichts, über eine eigene, fest montierte Streuvorrichtung .Streuvorrichtungen mit Streugut Vorratsbehälter und Streugutverteiler mittels rotierendem Drehteller können als bekannt und erprobt angesehen werden.

Zur Erfüllung der erfindungsmäßen Aufgabe ist der Streugutverteiler so ausgelegt, daß er mindestens eine Fahrspurbreite ausreichend mit Streugut versorgt. Der erforderliche Streugut Vorratsbehälter ist nur von geringer Größe, aber ausreichend für eine zu versorgenden Strecke von etwa max. 2000 Meter. Die mechanische Einheit mit Vorratsbehälter und Streugutverteiler ist unter der Nutzfläche im Bereich der hinteren Achsen fest montiert. Der Betrieb der mechanischen Einheit und deren Steuerung erfolgt vollautomatisch durch einen Bordcomputer, ohne zutun des Fahrzeuglenkers. Der Bordcomputer seinerseits kommuniziert mittels Digitalfunk mit dem Zentralcomputer der Autobahn Meisterei. Von hier erhält der Bordcomputer die erforderliche Logistik zur Steuerung des gesamten Systems. Zur Unterstützung der Logistik sind zusätzlich peripher noch folgende Geräte im Einsatz:
1. Datendisplay , optisch und akustisch für Nachrichten und Anweisungen an den Fahrzeug Lenker.
2. Optische Warn,- und Anzeige Lampen für den übrigen Verkehr.

Erfindungsgemäß ist die Software derart gestaltet, daß sie nachfolgend beschriebene Funktionen ermöglicht:
Bei Start des LKW geht die Bord Elektronik in Standby Betrieb.
Der Zentral Computer (Z.C.) kann alle im Sende- Empfangsbereich liegenden Fahrzeuge aktivieren und deren Code Nummer abfragen, damit ist die Anzahl der aktiven Fahrzeuge in einem bestimmten Streckenabschnitt erfaßt. Mittels Testprogramm können alle Funktionen der Anlage überprüft werden. Liegt ein Fehler vor z. B. fehlende Streugutmenge wird das dem Z.C. gemeldet und dem Fahrzeuglenker auf seinem Display angezeigt. Liegt eine Meldung der Wetter Beobachtungsstation vor, daß in Kürze mit Schnee oder gefrierenden Niederschlag zu rechnen ist, so kann der Z.C. alle Vorbereitungen zum Streudienst einleiten. Beginnend mit dem Einschalten der gelben Rundumleuchte am LKW, der dem übrigen Verkehr einen zu erwarteten Streuvorgang signalisiert. Um die Streufahrzeuge möglichst gleichmäßig auf die Strecke zu verteilen, wird dem Fahrzeuglenker auf dem Display angezeigt, welcher Abstand zum vorausfahrenden Streufahrzeug einzuhalten ist, der aus der Fahrzeugdichte vom Z.C. ermittelt wurde. Nach dieser Einstellphase wird dem Fahrzeuglenker eine einzuhaltene Höchstgeschwindigkeit angezeigt und am Fahrzeugheck angebrachtes Leuchttransparent Überholverbot eingeschaltet. Bei einsetzendem Niederschlag wird die Streuvorrichtung aller Streufahrzeuge durch den Z.C. zeitgleich eingeschaltet. Der Streuvorgang wird beendet wenn die Strecke bis zum vorausfahrenden Streufahrzeug gestreut ist.

Danach kann die Strecke wieder dem Normalverkehr freigegeben werden. Bei bedarf kann dieser Vorgang zu einem späteren Zeitpunkt wiederholt werden.

Zusammenfassend wird die Erfindung an Hand eines Blockschemas näher erläutert.
A. Autobahnmeisterei mit A. 1 Zentralcomputer und Digitalfunkstation, erhält Wettervorhersage vom Wetterdienst und der örtlichen Wetterbeobachtungsstation, erteilt Befehle und Mitteilungen an den Bordcomputer B. 1 der Streufahrzeuge B. und empfängt Daten der Streufahrzeuge.
B. Das Streufahrzeug ist ausgerüstet mit Bordcomputer B.1, Digitalfunkanlage mit Sender und Empfänger B. 2, Display für die Anweisungen an den Fahrzeuglenker B. 3,Vorratsbehälter B.4 mit Streugut und Füllstandsonde B.4.1, Streugutverteiler B.5 mit Motorantrieb, Rundumleuchte B. 6, Transparentes Überholverbot Schild B. 7.

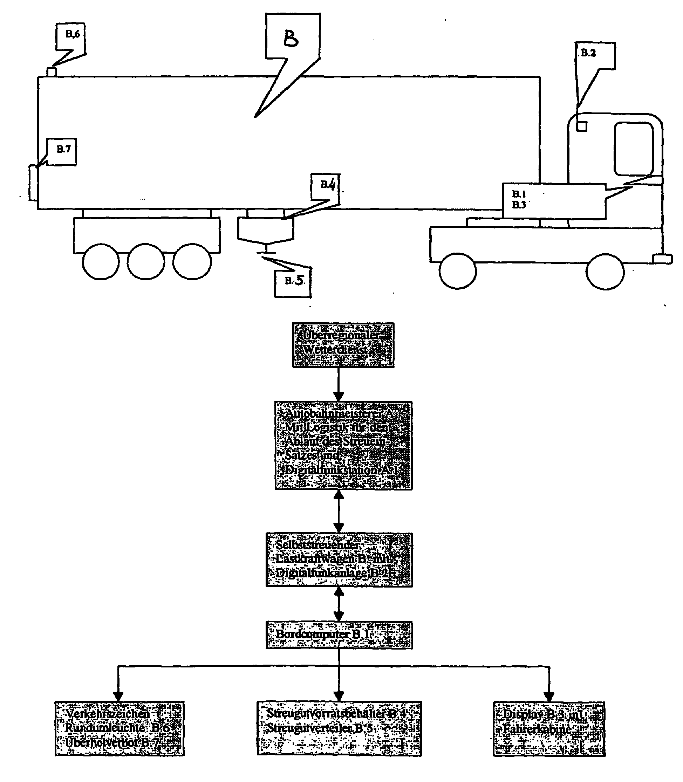

## Patentansprüche

1. Salz-Streuverfahren zur Verhinderung von Blitzeis und Schneeglätte wobei allgemein im Strassenverkehr zugelassene Nutzfahrzeuge mit mindestens 7,5 t Gesamtgewicht, durch eine zentrale Stelle, zum Beispiel die Autobahnmeisterei, zeitgleich mit Beginn des Nederschlages den Befehl mit der Streuung zu beginnen erhalten, wobei diese Nutzfahrzeuge mit selbsttätiger Salzstreueinrichtung zur Fahrbahnbestreuungausgerüstet sind, **dadurch gekennzeichnet, dass** hierfür der rollende Schwerlast Verkehr herangezogen wird.

2. Verfahren gemäss Anspruch 1, **dadurch gekennzeichnet, dass** ein eingebautes Computer unterstütztes Steuersystem (B.1) von einer zentralen Kommandostelle mittels Digitalfunkanlage (B.2), den Streuvorgang für alle Fahrzeuge gemäss Anspruch 1, auslöst.

3. Verfahren gemäss Anspruch 2, **dadurch gekennzeichnet, dass** der Fahrzeuglenker über Display (B.3) Signale und Weisungen der zentralen Kommandostelle empfängt.

4. Verfahren gemäss Anspruch 1 bis 3, **dadurch gekennzeichnet, dass** an der Fahrzeug Hinterseite eine Rundumleuchte und ein transparentes mit Hintergrundbeleuchtung versehenes Überholverbot Verkehrsschild (B.7) gemäss Strassenverkehrsordnung angebracht ist, der dem übrigen Verkehr einen zu erwartenden bzw. bestehenden Streugut Einsatz anzeigt.

## Claims

1. Self strewing truck B. as general commercial motor vehicle certified in the traffic with at least 7,5 tons total weight , with automatic salt strewing device, certified in the traffic, serves for the roadway covering and thus for the prevention of snow and ice smoothness on motorways and roads.

2. Truck in accordance with to requirement 1,
by the fact **characterized that** an inserted computer releases supported strewing system B.1 of centres' a command post by means of digital radio communication system B.2 the strewing procedure for all vehicles in accordance with to requirement 1.

3. Truck in accordance with requirement 2,
by the fact **characterized that** the vehicle steering wheel over display and instructions of the central command post receives signals.

4. Truck in accordance with requirement 1 to 3,
by the fact **characterized that** the vehicle rear side a Employment light (all around lamp) and a transparent providing overhauling prohibition traffic sign attached are in accordance with St.V.O (Straßen - Verkehrs - Ordnung), which the remaining traffic an expecting and / or existing grit employment indicates.

## Revendications

1. Le camion repandant comme vehicule utilitaire général immatricule
dans Le Transportroutier avec au moints 7,5 tonnes de points total, dddispositif de dispersion de sel automatique, au revetement de chaussee et donc a L'empechement de la neige de la douceur de glace Sur des autoroutes et des routes sert.

2. Camion conformement a L'exigence 1,
marque par qu ordinateurs unsysteme de dispersion B.1. sountenant insere centrales d' un poste de commandent au moyen de L'installation de radio numerique B.2. le procesus de dispersion pour tous les vehicules conformement a l'exigence 1, delenche.

3. Camion conforment a L' exigence 2,
marque par que Le Volant des signaux el les instructions des centrales poste de commandemt.

4. Camion conforment a L' exigence 1,2,3,
marque par qu' a La face arriere de véhicule, une lumiere de rhum ronde et une interdiction de dépassement fournissant avec un eclairage d' arriere - plan sont opportunes conformemt au code de la route auquel le restedu.
